# EUROPÄISCHE PATENTANMELDUNG

(11) **EP 3 441 597 A1**
(43) Veröffentlichungstag der Anmeldung: **13.02.2019**
(21) Anmeldenummer: 18187367.0
(22) Anmeldetag: 03.08.2018
(51) Int. Cl.: F02D 41/02, F02D 41/14, F02D 19/06

(54) **STEUERUNGSVERFAHREN UND BRENNKRAFTMASCHINE**

(30) Priorität: 11.08.2017 DE 102017214092
(71) Anmelder: Continental Automotive GmbH, 30165 Hannover (DE)
(72) Erfinder: Kastner, Oliver, 93093 Donaustauf (DE); Avolio, Giovanni, 93051 Regensburg (DE); Rösel, Gerd, 93055 Regensburg (DE)

(57) **Zusammenfassung**

Die Erfindung betrifft ein Steuerungsverfahren zum Steuern von bei der Verbrennung eines Kraftstoffes (22) in einer Brennkraftmaschine (12) entstehenden Verbrennungsemissionen (30), wobei zwei Kalibrationsparametersätze (50, 52) für jeweils eine Verbrennungscharakteristik mit minimalst möglichen NOx-Emissionen (42) bzw. minimalst möglichen CO2-Emissionen (48) bei der Verbrennung bereitgestellt werden, eine Bevölkerungsdichte (16, 18) in einer Umgebung (14) erfasst wird und anhand dessen, ob eine hohe oder eine niedrige Bevölkerungsdichte (16, 18) vorliegt einer der beiden Kalibrationsparametersätze (50, 52) ausgewählt wird. Weiter betrifft die Erfindung eine Brennkraftmaschine (12), die eine Steuerungseinrichtung (32) aufweist, welche das Steuerungsverfahren durchgeführt.

## Beschreibung

Die Erfindung betrifft ein Steuerungsverfahren zum Steuern von bei der Verbrennung eines Kraftstoffes in einer Brennkraftmaschine entstehenden Verbrennungsemissionen, sowie eine Brennkraftmaschine, bei der solche Verbrennungsemissionen über eine Steuerungseinrichtung gesteuert werden.

Bislang ist es bekannt, als Kraftstoff für eine Brennkraftmaschine Diesel oder Benzin bzw. Gas in einen Brennraum einzuspritzen, in welchem der jeweilige Kraftstoff verbrannt wird, um dabei in dem Kraftstoff als chemische Energie gespeicherte Energie in kinetische Energie umzuwandeln.

Beispielsweise entstehen bei der Verbrennung von solchen Kraftstoffen Verbrennungsemissionen wie beispielsweise NOx und CO2, aber auch Ruß, Kohlenwasserstoffe und CO.

Insbesondere CO2 ist als klimaschädliches Gas bekannt, während NOx für Lebewesen gesundheitsschädlich ist. Daher unterliegen Fahrzeuge mit Brennkraftmaschinen, in denen die genannten Kraftstoffe verbrannt werden, länderspezifischen Regularien, die neben anderen Verbrennungsemissionen u. a. NOx-Emissionen für jedes Fahrzeug einzeln und auch CO2-Emissionen als Flottenverbrauch limitieren. Bezüglich der NOx-Emissionen als Verbrennungsemissionen zeigt sich in Untersuchungen der letzten Jahre, dass insbesondere urbane Gebiete mit einer hohen Bevölkerungsdichte zunehmend an Belastungen durch NOx-Emissionen leiden. Im Mittel ist dieser Trend zwar rückläufig, dennoch sollte es weiterhin Ziel sein, insbesondere in urbanen Gebieten die NOx-Emissionen weiter zu senken.

Problematisch bei der Senkung von NOx-Emissionen als Verbrennungsemissionen ist es allerdings, dass diese nicht beliebig gesenkt werden können, da sie dem sog. Ruß-NOx-Trade-off folgen. Dieser Trade-off besagt, dass insbesondere die Rußemissionen bei Verbrennung von Diesel mit sinkenden NOx-Emissionen steigen. Daher ist eine NOx-Reduktion durch spezielle Steuerung der Verbrennung des Diesels innerhalb der Brennkraftmaschine nur in Grenzen möglich und kann nur so weit getrieben werden, wie die Emissionen von Ruß, Kohlenwasserstoffen und CO noch im zulässigen Bereich liegen.

Weiter bringt eine NOx-Reduktion einen gesteigerten Kraftstoffverbrauch mit sich, so dass der CO2-Ausstoß mit abnehmenden NOx-Emissionen steigt.

Daher folgen die NOx-Emissionen nicht nur einem Ruß-NOx-Trade-off, sondern auch einem CO2-NOx-Trade-off. Somit können nicht gleichzeitig die NOx- und CO2-Emissionen durch eine spezielle Steuerung der Verbrennung des jeweiligen Kraftstoffes gesenkt werden.

Aufgabe der Erfindung ist es daher, ein in dieser Hinsicht verbessertes Steuerungsverfahren zum Steuern von bei der Verbrennung eines Kraftstoffes in der Brennkraftmaschine entstehenden Verbrennungsemissionen vorzuschlagen.

Diese Aufgabe wird mit einem Steuerungsverfahren mit der Merkmalskombination des Anspruches 1 gelöst.

Eine Brennkraftmaschine, die eine Steuereinrichtung aufweist, welche dieses Steuerverfahren durchführen kann, ist Gegenstand des nebengeordneten Anspruches.

Vorteilhafte Ausgestaltungen der Erfindung sind Gegenstand der abhängigen Ansprüche.

Ein Steuerungsverfahren zum Steuern von bei der Verbrennung eines Kraftstoffes in einer Brennkraftmaschine entstehenden Verbrennungsemissionen weist die folgenden Schritte auf:
- Bereitstellen eines ersten Kalibrationsparametersatzes zum Einstellen einer ersten Verbrennungscharakteristik, bei der der Kraftstoff unter Bildung einer minimalst möglichen NOx-Masse pro eingesetzter Kraftstoffmasse verbrennt;
- Bereitstellen eines zweiten Kalibrationsparametersatzes zum Einstellen einer zweiten Verbrennungscharakteristik, bei der der Kraftstoff unter Bildung einer minimalst möglichen CO2-Masse pro eingesetzter Kraftstoffmasse verbrennt;
- Erfassen einer Bevölkerungsdichte in einer Umgebung, in der die Brennkraftmaschine bei der Verbrennung betrieben wird;
- Bestimmen, ob die erfasste Bevölkerungsdichte in der Umgebung einer hohen Bevölkerungsdichte oder einer niedrigen Bevölkerungsdichte entspricht;
- Auswählen und Aktivieren des ersten Kalibrationsparametersatzes, wenn die Brennkraftmaschine in einer Umgebung mit einer hohen Bevölkerungsdichte betrieben wird;
   oder
- Auswählen und Aktivieren des zweiten Kalibrationsparametersatzes, wenn die Brennkraftmaschine in einer Umgebung mit einer niedrigen Bevölkerungsdichte betrieben wird.

Durch das Steuerungsverfahren ist es möglich, die Brennkraftmaschine in zwei unterschiedlichen Modi zu betreiben. Dabei werden zwei Kalibrationsparametersätze bereitgestellt, die die Verbrennung entweder auf eine Reduktion der NOx-Emissionen oder auf eine Reduktion der CO2-Emissionen optimieren.

Je nachdem, in welcher Umgebung sich beispielsweise ein Fahrzeug, das die Brennkraftmaschine aufweist, bewegt, und wie hoch die Bevölkerungsdichte in dieser Umgebung ist, wird die Verbrennung entweder auf eine möglichst geringe NOx-Emission oder eine möglichst geringe CO2-Emission eingestellt.

Befindet sich die Brennkraftmaschine in einem eher urbanen Gebiet, d. h. wegen der dort vorhandenen Bevölkerung in einem NOx-sensitiven Gebiet, wird der erste Kalibrationsparametersatz ausgewählt und somit die Verbrennung so gesteuert, dass möglichst wenig NOx-Emissionen entstehen.

Befindet sich die Brennkraftmaschine jedoch in einem beispielsweisen ländlichen Gebiet oder wird auf einer Autobahn eingesetzt, wird der zweite Kalibrationsparametersatz aktiviert, so dass die Verbrennung auf eine möglichst geringe CO2-Emission optimiert wird.

Dadurch können die NOx-Emissionen punktuell in urbanen empfindlichen Gebieten, aber auch gleichzeitig die CO2-Emissionen im Mittel für das Fahrzeug ebenfalls maximal reduziert werden.

Vorzugsweise wird ein Grenzwert für die Bevölkerungsdichte in der Umgebung vorbestimmt, wobei die Bevölkerungsdichte bei einem Wert größer oder gleich des Grenzwertes als eine hohe Bevölkerungsdichte definiert wird, wobei die Bevölkerungsdichte bei einem Wert kleiner als der Grenzwert als eine niedrige Bevölkerungsdichte definiert wird.

Durch Definition eines entsprechenden Grenzwertes für die Bevölkerungsdichte ist es möglich, zu unterscheiden, ob sich die Brennkraftmaschine eher in einem urbanen Gebiet oder eher in einem ländlichen Gebiet bzw. auf beispielsweise einer Autobahn befindet.

Vorzugsweise erfolgt das Erfassen der Bevölkerungsdichte durch Erfassen einer Bewegungsgeschwindigkeit eines Fahrzeugs, in dem die Brennkraftmaschine angeordnet ist. Anhand der Bewegungsgeschwindigkeit des Fahrzeuges ist es möglich zu entscheiden, ob sich das Fahrzeug und damit die darin angeordnete Brennkraftmaschine eher in einem urbanen Gebiet oder eher in einem ländlichen Gebiet bzw. auf der Autobahn befindet. Die Wahrscheinlichkeit, dass sich das Fahrzeug bei einer langsamen Fahrweise eher in einem urbanen Gebiet bzw. in einem Bereich befindet, in dem viele Lebewesen vorhanden sind, ist größer als bei einer schnellen Fahrweise, wie sie normalerweise eher auf Autobahnen anzutreffen ist.

Alternativ oder zusätzlich ist es jedoch auch möglich, die Bevölkerungsdichte über ein GPS-System zu erfassen, in dem Ortschaften und Städte registriert sind, und über das eine Positionsbestimmung der Brennkraftmaschine relativ zu diesen Ortschaften bzw. Städten möglich ist.

Alternativ oder zusätzlich ist es jedoch auch möglich, wenigstens einen Sensor in dem Fahrzeug bzw. der Brennkraftmaschine anzuordnen, der Lebewesen in der Umgebung erfassen kann. Über einen solchen Sensor ist es ebenfalls möglich, die Bevölkerungsdichte in der Umgebung der Brennkraftmaschine festzustellen.

Vorzugsweise wird in dem Steuerungsverfahren ein NOx-Abgasnachbehandlungssystem zum Verringern von NOx-Emissionen, die als Verbrennungsemissionen in einem durch die Verbrennung des Kraftstoffes gebildeten Abgas entstehen, bereitgestellt, und das durch die Verbrennung des Kraftstoffes in der Brennkraftmaschine gebildete Abgas mit dem NOx-Abgasnachbehandlungssystem nachbehandelt, bevor das Abgas in die Umgebung ausgestoßen wird.

Dadurch ist es möglich, NOx-Emissionen, egal in welchem Modus die Brennkraftmaschine betrieben wird, soweit wie möglich herabzusenken.

Bei Verwendung des ersten Kalibrationsparametersatzes wird demgemäß die Kalibration der Verbrennung so eingestellt, dass die innermotorischen NOx-Emissionen am unterstmöglichen Limit liegen. Zusammen mit einem hocheffizienten NOx-Abgasnachbehandlungssystem werden die in die Umgebung ausgestoßenen NOx-Emissionen so gering, dass für die Bevölkerung kein Gesundheitsrisiko besteht. Dabei ist das innermotorische NOx-Limit durch die Robustheit der Brennkraftmaschine, durch Langlebigkeit und Fahrbarkeit definiert.

Bei Verwendung des zweiten Kalibrationsparametersatzes wird die Kalibration der Verbrennung so eingestellt, dass innermotorisch die CO2-Emissionen minimalst sind. Damit einhergehend sind die innermotorischen NOx-Emissionen höher als bei der Verwendung des ersten Kalibrationsparametersatzes, aber immer noch so gering, dass mit dem hocheffizienten NOx-Abgasnachbehandlungssystem die für die Umgebung ausgestoßenen NOx-Emissionen noch unter dem gesetzlichen Grenzwert liegen.

Das bedeutet, dass bei der Verwendung des ersten Kalibrationsparametersatzes unter Hinzunahme des NOx-Abgasnachbehandlungssystem die NOx-Emissionen so niedrig sind, dass ihr Wert sogar unterhalb des Wertes von NOx in der Umgebung liegen kann. Bei der Verwendung des zweiten Kalibrationsparametersatzes liegt der Wert der NOx-Emissionen zwar etwas über dem Wert der Umgebung, aber immer noch unter dem gesetzlichen Grenzwert. Dieser liegt bei der sog. Euro6-Norm für Pkws bei 0,08 g/km, entsprechend für Lkws gemäß der EUVI-Norm.

In besonders vorteilhafer Ausgestaltung wird in der Brennkraftmaschine ein synthetischer Kraftstoff verbrannt.

Unter synthetischen Kraftstoffen sollen dabei solche Kraftstoffe verstanden werden, die durch menschliche Hand über eine kontrollierte chemische Reaktion erzeugt worden sind. Insbesondere sollen dabei solche Kraftstoffe verstanden werden, die unter Verwendung von bereits in der Umgebung frei verfügbarem CO2 und elektrischer Energie aus erneuerbaren Energiequellen erzeugt worden sind.

Von den synthetischen Kraftstoffen zu unterscheiden sind sog. fossile Kraftstoffe, die durch eine Raffination von Rohöl bzw. Erdöl gewonnen werden. Darunter fallen sowohl Dieselkraftstoffe als auch Benzinkraftstoffe, aber auch alle anderen bekannten standardmäßig verfügbaren Kraftstoffe auf Basis von Rohöl.

Die Verbrennung von synthetischem Kraftstoff in der Brennkraftmaschine bietet bei der Verwendung der beiden Steuerungsmodi den Vorteil, dass synthetische Kraftstoffe weitgehend rußfrei verbrennen und damit der beispielsweise von der Verbrennung von Diesel bekannte limitierende Ruß-NOx-Trade-off nicht mehr existiert. Dadurch können jeweils die Kalibrationsparametersätze in den beiden Modi gezielt auf Verringerung von NOx-Emissionen bzw. CO2-Emissionen eingestellt werden.

Eine Brennkraftmaschine zum Verbrennen eines Kraftstoffes weist eine Steuerungseinrichtung zum Steuern von bei der Verbrennung eines Kraftstoffes in der Brennkraftmaschine entstehenden Verbrennungsemissionen auf, wobei die Steuerungseinrichtung einen ersten Kalibrationsparametersatz zum Einstellen einer ersten Verbrennungscharakteristik, bei der der Kraftstoff unter Bildung einer minimalst möglichen NOx-Masse pro eingesetzter Kraftstoffmasse verbrennt, und einen zweiten Kalibrationsparametersatz zum Einstellen einer zweiten Verbrennungscharakteristik aufweist, bei der der Kraftstoff unter Bildung einer minimalst möglichen CO2-Masse pro eingesetzter Kraftstoffmasse verbrennt. Zusätzlich weist die Brennkraftmaschine eine Erfassungseinrichtung zum Erfassen einer Bevölkerungsdichte in einer Umgebung, in der die Brennkraftmaschine bei der Verbrennung betrieben wird, auf. Die Steuerungseinrichtung ist dazu ausgebildet, entweder den ersten Kalibrationsparametersatz auszuwählen und zu aktivieren, wenn die Brennkraftmaschine in einer Umgebung mit einer hohen Bevölkerungsdichte betrieben wird, oder den zweiten Kalibrationsparametersatz auszuwählen und zu aktivieren, wenn die Brennkraftmaschine in einer Umgebung mit einer niedrigen Bevölkerungsdichte betrieben wird.

Somit ist die Steuerungseinrichtung vorteilhaft dazu ausgebildet, das oben beschriebene Steuerungsverfahren durchzuführen.

Um zu entscheiden, ob die Brennkraftmaschine in einer Umgebung mit einer hohen Bevölkerungsdichte oder einer niedrigen Bevölkerungsdichte betrieben wird, ist in der Steuerungseinrichtung ein Grenzwert hinterlegt, der den Bereich der hohen Bevölkerungsdichte von dem Bereich der niedrigen Bevölkerungsdichte trennt.

Vorteilhaft weist die Steuerungseinrichtung zusätzlich eine Vergleichseinrichtung auf, die die erfasste Bevölkerungsdichte mit dem Grenzwert vergleicht, um zu entscheiden, ob sich die Brennkraftmaschine in einer Umgebung mit einer niedrigen oder einer hohen Bevölkerungsdichte befindet.

Vorzugsweise ist die Erfassungseinrichtung gebildet durch eine Bewegungsgeschwindigkeitserfassungseinheit zum Erfassen einer Bewegungsgeschwindigkeit eines Fahrzeugs, in dem die Brennkraftmaschine angeordnet ist.

Zusätzlich oder alternativ ist die Erfassungseinrichtung durch ein GPS-System gebildet.

Zusätzlich oder alternativ kann die Erfassungseinrichtung aber auch durch einen Sensor zur Erfassung von Lebewesen in der Umgebung der Brennkraftmaschine ausgebildet sein.

In besonders vorteilhafter Ausgestaltung weist die Brennkraftmaschine ein NOx-Abgasnachbehandlungssystem zum Verringern von NOx-Emissionen auf, die als Verbrennungsemissionen in einem durch die Verbrennung des Kraftstoffes gebildeten Abgas entstehen.

Vorzugsweise weist die Brennkraftmaschine einen Speicher mit synthetischem Kraftstoff auf, wobei die Brennkraftmaschine zum Verbrennen des gespeicherten synthetischen Kraftstoffes optimiert ist.

Eine vorteilhafte Ausgestaltung der Erfindung wird nachfolgend anhand der beigefügten Zeichnungen näher erläutert. Darin zeigt:
- Fig. 1a: eine schematische Darstellung eines Fahrzeugs mit einer Brennkraftmaschine, das in einer Umgebung mit einer hohen Bevölkerungsdichte betrieben wird;
- Fig. 1b: eine schematische Darstellung eines Fahrzeugs mit einer Brennkraftmaschine, das in einer Umgebung mit einer niedrigen Bevölkerungsdichte betrieben wird;
- Fig. 2: ein Diagramm, bei dem für Diesel als Kraftstoff und für einen synthetischen Kraftstoff ein Kraftstoffverbrauch über eine NOx-Emission bzw. eine Rußemission über eine NOx-Emission aufgetragen ist;
- Fig. 3: eine schematische Darstellung einer Steuerungseinrichtung, mit der abhängig von einer Bevölkerungsdichte in der Umgebung ein Kalibrationsparametersatz zur Steuerung einer Verbrennung von Kraftstoff in der Brennkraftmaschine aus Fig. 1a und Fig. 1b ausgewählt werden kann; und
- Fig. 4: ein Flussdiagramm, das schematisch Schritte eines Steuerungsverfahrens zum Steuern von bei der Verbrennung eines Kraftstoffes in der Brennkraftmaschine aus Fig. 1a und Fig. 1b entstehenden Verbrennungsemissionen darstellt.

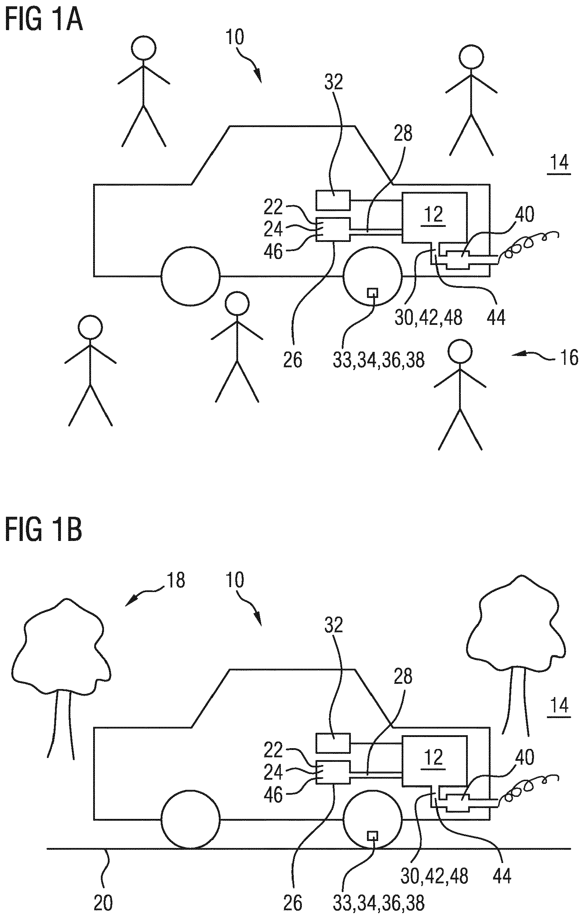

Fig. 1a und Fig. 1b zeigen jeweils eine schematische Darstellung eines Fahrzeuges 10, das eine Brennkraftmaschine 12 aufweist und in einer Umgebung 14 fährt. In Fig. 1a bewegt sich das Fahrzeug 10 in einer Umgebung 14 mit einer hohen Bevölkerungsdichte 16.

In Fig. 1b dagegen bewegt sich das Fahrzeug 10 in einer Umgebung 14 mit einer niedrigen Bevölkerungsdichte 18, beispielsweise auf einer Autobahn 20.

Die Brennkraftmaschine 12 in dem Fahrzeug 10 verbrennt beim Betrieb einen Kraftstoff 22, der in einem Speicher 24, beispielsweise in einem Tank 26, in dem Fahrzeug 10 gespeichert ist, und über eine entsprechende Kraftstoffleitung 28 zu der Brennkraftmaschine 12 zugeführt wird.

Je nachdem, wie die Brennkraftmaschine 12 kalibriert ist, kann die Verbrennung des Kraftstoffes 22 in der Brennkraftmaschine 12 unter Bildung unterschiedlicher Konzentrationen an Verbrennungsemissionen 30 erfolgen.

Diese Verbrennungsemissionen 30 bei der Verbrennung können über eine Steuerungseinrichtung 32 eingestellt werden. Beispielsweise können dabei Umgebungsbedingungen wie beispielsweise die Bevölkerungsdichte 16, 18 berücksichtigt werden. Dazu kann das Fahrzeug 10 bzw. die Brennkraftmaschine 12 eine Erfassungseinrichtung 33, z. B. einen entsprechenden Sensor 34 aufweisen, der die Bevölkerungsdichte 16, 18 in der Umgebung 14 des Fahrzeuges 10 bzw. der Brennkraftmaschine 12 erfasst. Der Sensor 34 kann dabei beispielsweise eine Bewegungsgeschwindigkeitserfassungseinheit 36 sein, die die Bewegungsgeschwindigkeit des Fahrzeuges 10 erfasst. Ein Fahrzeug 10, das besonders schnell fährt, ist mit höherer Wahrscheinlichkeit auf einer Autobahn oder auf einer Landstraße und somit in einer Umgebung 14 mit einer niedrigen Bevölkerungsdichte 18 unterwegs, als ein Fahrzeug 10, das sich in der Stadt und somit in einer Umgebung 14 mit einer hohen Bevölkerungsdichte 16 bewegt.

Der Sensor 34 kann auch ein Sensor sein, der Lebewesen in der Umgebung 14 der Brennkraftmaschine 12 erfassen kann. Alternativ oder zusätzlich ist es auch möglich, dass der Sensor 34 als GPS-Kommunikationseinrichtung 38 ausgebildet ist. So ist es möglich, über ein GPS-System die Bevölkerungsdichte 16, 18 in der Umgebung 14 zu ermitteln.

Die Brennkraftmaschine 12 weist weiter ein NOx-Abgasnachbehandlungssystem 40 auf, das NOx-Emissionen 42 in einem Abgas 44, das bei der Verbrennung des Kraftstoffes 22 in der Brennkraftmaschine 12 entsteht, verringern kann.

Der Kraftstoff 22, der in dem Speicher 24 angeordnet ist, ist in der gezeigten Ausführungsform ein synthetischer Kraftstoff 46. Solche synthetischen Kraftstoffe 46 werden aus Umgebungs-CO2 und zumeist aus elektrischer Energie aus erneuerbaren Energiequellen gewonnen, und tragen daher bei ihrer Verbrennung zu einer CO2-Neutralität des jeweiligen Fahrzeuges 10 bei. Bekannte synthetische Kraftstoffe 46 sind beispielsweise Oxymethylenether (OME, DME), Methanol, Dimethylcarbonat(DMC) oder Dimethylcarbonat/Methylformiat (DMC+). Bei der Verbrennung von Kohlenwasserstoff-basierten Kraftstoffen 22, unabhängig davon ob es sich um synthetische Kraftstoffe 46 oder um fossile Kraftstoffe handelt, entstehen immer CO2-Emissionen 48. Der Vorteil der synthetischen Kraftstoffe 46 liegt insbesondere darin, dass diese CO2-Emissionen 48 nicht in einer derart gebundenen Form vorliegen, dass sie zuvor nicht schon in der Umgebung vorhanden waren, sondern dass diese synthetischen Kraftstoffe 46 gezielt aus bereits in die Umgebung freigesetztem CO2 erzeugt worden sind. Bei fossilen Kraftstoffen dagegen ist das CO2 im Wesentlichen gebunden und wird erst durch die Verbrennung in die Umgebung freigesetzt, wo es vorher nicht vorhanden war.

CO2-Emissionen 48 sind problematisch, da sie als Klimagas generell zur Klimaerwärmung beitragen.

NOx-Emissionen 42 dagegen sind problematisch, da sie besonders gesundheitsschädlich für Lebewesen sind.

Ziel ist es daher, bei jeder Brennkraftmaschine 12 sowohl die NOx-Emissionen 42 als auch die CO2-Emissionen 48 möglichst niedrig zu halten.

Problematisch bei der Reduktion der genannten Emissionen ist es, dass beispielsweise bei normalen Kraftstoffen 22 wie Diesel die NOx-Emissionen 42 nicht beliebig gesenkt werden können, da diese NOx-Emissionen 42 dem sogenannten Ruß-NOx-Trade-off folgen.

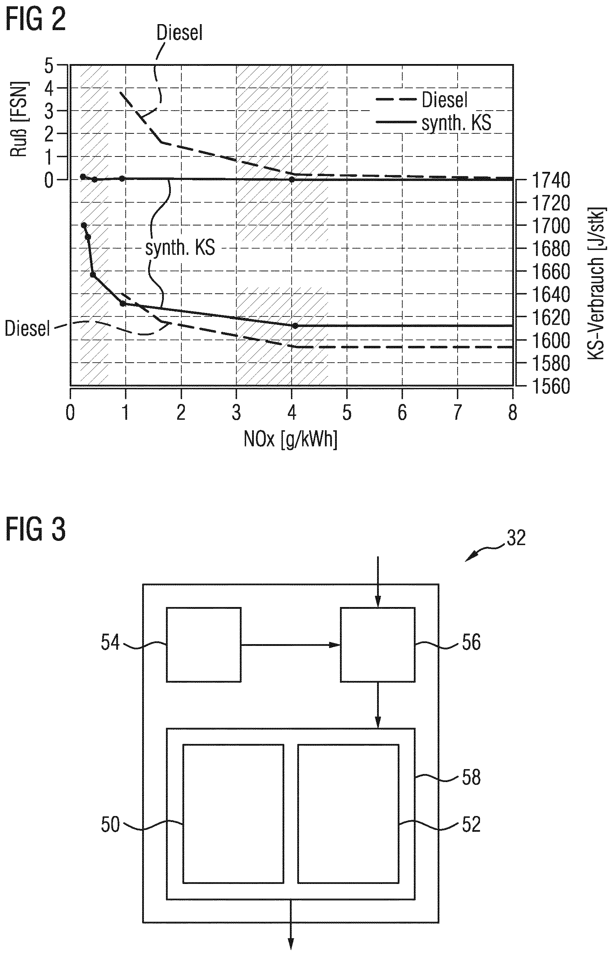

Fig. 2 zeigt hierzu im oberen Bereich ein Diagramm in schwarz, das bei der Verbrennung von Diesel als Kraftstoff 22 die Rußemission über die NOx-Emissionen 42 darstellt. Es ist zu erkennen, dass bei immer kleineren Werten für die NOx-Emissionen 42 die Rußemissionen sprunghaft ansteigt. Daher ist die Reduktion von NOx-Emissionen 42 nach unten hin limitiert, da Ruß als Emission ebenfalls nicht gewünscht ist.

In dem gleichen Diagramm ist in blau eine entsprechende Kurve der Rußemissionen über NOx-Emissionen 42 für synthetische Kraftstoffe aufgetragen. Hier ist zu erkennen, dass der sprunghafte Anstieg der Rußemission auch bei immer kleineren NOx-Emissionen 42 nicht erfolgt. Daher können bei der Verwendung von synthetischem Kraftstoff 46 die NOx-Emissionen 42 ohne Rücksicht auf potentielle Rußemissionen weitest möglich herabgesenkt werden. Der innermotorischen NOx-Reduktion sind bezüglich Rußemissionen daher keine Grenzen gesetzt.

Allerdings ist in dem unteren Diagramm in Fig. 2 ein weiterer limitierender Faktor zu sehen. Hier ist der Kraftstoffverbrauch für beide Kraftstoffe 22 - Diesel und synthetischer Kraftstoff 46 - über die NOx-Emissionen 42 aufgetragen. Auch hier ist zu sehen, dass es bei verringerten NOx-Emissionen 42 zu einem größeren Kraftstoffverbrauch kommt, der gleichzeitig mit einem erhöhten CO2-Ausstoß einhergeht. Daher ist die Reduktion der NOx-Emissionen 42 durch einen sogenannten CO2-NOx-Trade-Off limitiert.

Das heißt, die NOx-Emissionen 42 können durch entsprechende Einstellung der Verbrennung nicht beliebig abgesenkt werden, ohne zu erhöhten CO2-Emissionen 48 zu führen.

In diesem CO2-NOx-Trade-Off resultiert die Idee, die NOx-Emissionen 42 dann so niedrig wie möglich zu halten, wenn es unbedingt erforderlich ist, und in allen anderen Fällen das Augenmerk auf die CO2-Emissionen 48 zu legen.

Der wichtige Faktor hierbei ist die Bevölkerungsdichte 16, 18, da die NOx-Emissionen 42 gesundheitsschädlich für Lebewesen sind.

Die Idee ist es daher, die NOx-Emissionen 42 in den Gegenden, in denen eine höhe Bevölkerungsdichte 16 zu erwarten ist, so gering wie möglich zu halten, während in Gegenden, in denen eine geringere Bevölkerungsdichte 18 vorliegt, die CO2-Emissionen 48 zu verringern.

Dazu werden in der Steuerungseinrichtung 32 zwei Kalibrationsparametersätze 50, 52 hinterlegt, wobei der erste Kalibrationsparametersatz 50 eine erste Verbrennungscharakteristik der Verbrennung des Kraftstoffes 22 in der Brennkraftmaschine 12 repräsentiert, bei der Kraftstoff 22 unter Bildung einer minimalst möglichen NOx-Masse pro eingesetzter Kraftstoffmasse verbrennt. Der zweite Kalibrationsparametersatz 52 repräsentiert eine zweite Verbrennungscharakteristik, bei der der Kraftstoff 22 bei der Verbrennung in der Brennkraftmaschine 12 unter Bildung einer minimalst möglichen CO2-Masse pro eingesetzter Kraftstoffmasse verbrennt.

Je nachdem, wo über die Erfassungseinrichtung 33 dann erfasst wird, dass das Fahrzeug 10 sich bewegt, ob in einer Umgebung 14 mit hoher Bevölkerungsdichte 16 oder mit niedriger Bevölkerungsdichte 18, wird dann der erste Kalibrationsparametersatz 50 oder der zweite Kalibrationsparametersatz 52 aktiviert.

Damit entschieden werden kann, ob eine erfasste Bevölkerungsdichte 16, 18 einer hohen Bevölkerungsdichte 16 oder einer niedrigen Bevölkerungsdichte 18 zuzuordnen ist, ist in der Steuerungseinrichtung 32 ein Grenzwert 54 hinterlegt, der definiert, dass bei einem Wert der Bevölkerungsdichte 16, 18 größer oder gleich des Grenzwertes 54 eine hohe Bevölkerungsdichte 16 vorliegt, und dass bei Unterschreiten des Grenzwertes 54 eine niedrige Bevölkerungsdichte 18 vorliegt.

Eine schematische Darstellung der Steuereinrichtung 32, die dazu ausgelegt ist, die Verbrennung des Kraftstoffes 22 entsprechend der oben genannten Bedingungen zu steuern, ist in Fig. 3 gezeigt.

Die Steuereinrichtung 32 weist hierbei eine Vergleichseinrichtung 56 auf. Diese Vergleichseinrichtung 56 vergleicht den von der Erfassungseinrichtung 33 erfassten Wert der Bevölkerungsdichte 16, 18 mit dem in der Steuerungseinrichtung 32 hinterlegen Grenzwert 54, und entscheidet anhand dieses Vergleiches, ob in der Umgebung 14 eine hohe Bevölkerungsdichte 16 oder eine niedrige Bevölkerungsdichte 18 vorliegt.

Diese Information wird an eine Auswahleinrichtung 58 in der Steuerungseinrichtung 32 weitergegeben, wo die beiden Kalibrationsparametersätze 50, 52 hinterlegt sind, und wo jeweils einer der beiden Kalibrationsparametersätze 50, 52 anhand der ermittelten Bevölkerungsdichte 16, 18 ausgewählt wird. Der ausgewählte Kalibrationsparametersatz 50, 52 wird dann an die Brennkraftmaschine 12 weiterkommuniziert, wo dann entsprechend die Verbrennung des Kraftstoffes 22 mit der zugehörigen Verbrennungscharakteristik erfolgt.

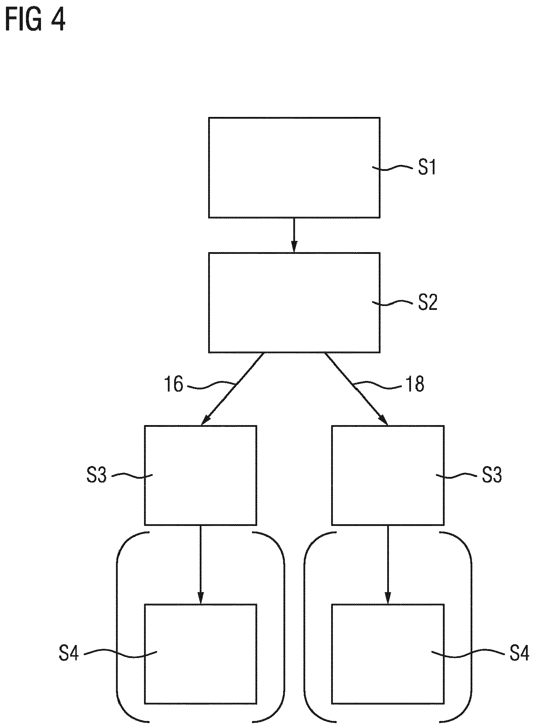

Das Steuerungsverfahren, das von der Steuerungseinrichtung 32 zum Ansteuern der Verbrennung des Kraftstoffes 22 in der Brennkraftmaschine 12 durchgeführt wird, ist in Fig. 4 in einem schematischen Flussidagramm dargestellt.

Dabei wird in einem ersten Schritt S1 die Bevölkerungsdichte 16, 18 erfasst. In einem zweiten Schritt S2 wird dann die erfasste Bevölkerungsdichte 16, 18 mit dem Grenzwert 54 verglichen und entschieden, ob eine hohe Bevölkerungsdichte 16 oder eine niedrige Bevölkerungsdichte 18 vorliegt. In dem Fall, dass eine hohe Bevölkerungsdichte 16 vorliegt, wird in einem dritten Schritt S3 der erste Kalibrationsparametersatz 50 ausgewählt und an die Brennkraftmaschine 12 weitergeleitet, sodass dort eine Verbrennung mit einer Verbrennungscharakteristik erfolgt, die in einer minimalst möglichen NOx-Masse pro eingesetzter Kraftstoffmasse resultiert. In dem Fall, dass es sich bei der Bevölkerungsdichte um eine niedrige Bevölkerungsdichte 18 handelt, wird in dem dritten Schritt S3 der zweite Kalibrationsparametersatz 52 ausgewählt, und somit die Verbrennung des Kraftstoffes 22 so angesteuert, dass sich die minimalst mögliche CO2-Masse pro eingesetzter Kraftstoffmasse bildet.

Optional kann in beiden Fällen in einem vierten Schritt S4 das entstehende Abgas 44 in dem NOx-Abgasnachbehandlungssystem 40 von NOx-Emissionen 42 befreit werden.

## Patentansprüche

1. Steuerungsverfahren zum Steuern von bei der Verbrennung eines Kraftstoffes (22) in einer Brennkraftmaschine (12) entstehenden Verbrennungsemissionen (30), aufweisend die Schritte:
- Bereitstellen eines ersten Kalibrationsparametersatzes (50) zum Einstellen einer ersten Verbrennungscharakteristik, bei der der Kraftstoff (22) unter Bildung einer minimalst möglichen NOx-Masse pro eingesetzter Kraftstoffmasse verbrennt;
- Bereitstellen eines zweiten Kalibrationsparametersatzes (52) zum Einstellen einer zweiten Verbrennungscharakteristik, bei der der Kraftstoff (22) unter Bildung einer minimalst möglichen CO2-Masse pro eingesetzter Kraftstoffmasse verbrennt;
- Erfassen einer Bevölkerungsdichte (16, 18) in einer Umgebung (14), in der die Brennkraftmaschine (12) bei der Verbrennung betrieben wird;
- Bestimmen, ob die erfasste Bevölkerungsdichte (16, 18) in der Umgebung (14) einer hohen Bevölkerungsdichte (16) oder einer niedrigen Bevölkerungsdichte (18) entspricht;
- Auswählen und Aktivieren des ersten Kalibrationsparametersatzes (50), wenn die Brennkraftmaschine (12) in einer Umgebung (14) mit einer hohen Bevölkerungsdichte (16) betrieben wird;
oder
- Auswählen und Aktivieren des zweiten Kalibrationsparametersatzes (52), wenn die Brennkraftmaschine (12) in einer Umgebung (14) mit einer niedrigen Bevölkerungsdichte (18) betrieben wird.

2. Steuerungsverfahren nach Anspruch 1,
**dadurch gekennzeichnet, dass** ein Grenzwert (54) für die Bevölkerungsdichte (16, 18) in der Umgebung (14) vorbestimmt wird, wobei die Bevölkerungsdichte (16, 18) bei einem Wert größer oder gleich des Grenzwertes (54) als eine hohe Bevölkerungsdichte (18) definiert wird, wobei die Bevölkerungsdichte (16, 18) bei einem Wert kleiner als der Grenzwert (54) als eine niedrige Bevölkerungsdichte (18) definiert wird.

3. Steuerungsverfahren nach einem der Ansprüche 1 oder 2, **dadurch gekennzeichnet, dass** das Erfassen der Bevölkerungsdichte (16, 18) durch Erfassen einer Bewegungsgeschwindigkeit eines Fahrzeuges (10), in dem die Brennkraftmaschine (12) angeordnet ist, oder über ein GPS-System oder über wenigstens einen in der Brennkraftmaschine (12) angeordnete Sensor (34), der Lebewesen in der Umgebung (14) der Brennkraftmaschine (12) erfasst, erfolgt.

4. Steuerungsverfahren nach einem der Ansprüche 1 bis 3, **gekennzeichnet durch**:
- Bereitstellen eines NOx-Abgasnachbehandlungssystems (40) zum Verringern von NOx-Emissionen (42), die als Verbrennungsemissionen (30) in einem durch die Verbrennung des Kraftstoffes (22) gebildeten Abgas (44) entstehen; und
- Nachbehandeln des durch die Verbrennung des Kraftstoffes (22) in der Brennkraftmaschine (12) gebildeten Abgases (44) mit dem NOx-Abgasnachbehandlungssystem (40) vor Ausstoßen des Abgases (44) in die Umgebung.

5. Steuerungsverfahren nach einem der Ansprüche 1 bis 4, **gekennzeichnet durch** Verbrennen eines synthetischen Kraftstoffes (46) in der Brennkraftmaschine (12).

6. Brennkraftmaschine (12) zum Verbrennen eines Kraftstoffes (22), aufweisend:
- eine Steuerungseinrichtung (32) zum Steuern von bei der Verbrennung eines Kraftstoffes (22) in der Brennkraftmaschine (12) entstehenden Verbrennungsemissionen (30), wobei die Steuerungseinrichtung (32) einen ersten Kalibrationsparametersatz (50) zum Einstellen einer ersten Verbrennungscharakteristik, bei der der Kraftstoff (22) unter Bildung einer minimalst möglichen NOx-Masse pro eingesetzter Kraftstoffmasse verbrennt, und einen zweiten Kalibrationsparametersatz (52) zum Einstellen einer zweiten Verbrennungscharakteristik, bei der der Kraftstoff (22) unter Bildung einer minimalst möglichen CO2-Masse pro eingesetzter Kraftstoffmasse verbrennt, aufweist; und
- eine Erfassungseinrichtung (33) zum Erfassen einer Bevölkerungsdichte (16, 18) in einer Umgebung (14), in der die Brennkraftmaschine (12) bei der Verbrennung betrieben wird; wobei die Steuerungseinrichtung (32) dazu ausgebildet ist, entweder den ersten Kalibrationsparametersatz (50) auszuwählen und zu aktivieren, wenn die Brennkraftmaschine (12) in einer Umgebung (14) mit einer hohen Bevölkerungsdichte (16) betrieben wird, oder den zweiten Kalibrationsparametersatz (52) auszuwählen und zu aktivieren, wenn die Brennkraftmaschine (12) in einer Umgebung (14) mit einer niedrigen Bevölkerungsdichte (18) betrieben wird.

7. Brennkraftmaschine (12) nach Anspruch 6,
**dadurch gekennzeichnet, dass** die Erfassungseinrichtung (33) gebildet ist durch eine Bewegungsgeschwindigkeitserfassungseinheit (36) zum Erfassen einer Bewegungsgeschwindigkeit eines Fahrzeuges (10), in dem die Brennkraftmaschine (12) angeordnet ist, oder durch ein GPS-System oder durch einen Sensor (34) zum Erfassen von Lebewesen in der Umgebung (14) der Brennkraftmaschine (12).

8. Brennkraftmaschine (12) nach einem der Ansprüche 6 oder 7, **gekennzeichnet durch** ein NOx-Abgasnachbehandlungssystem (40) zum Verringern von NOx-Emissionen (42), die als Verbrennungsemissionen (30) in einem durch die Verbrennung des Kraftstoffes (22) gebildeten Abgas (44) entstehen.

9. Brennkraftmaschine (12) nach einem der Ansprüche 6 bis 8, **gekennzeichnet durch** einen Speicher (24) mit synthetischem Kraftstoff (46), wobei die Brennkraftmaschine (12) zum Verbrennen des gespeicherten synthetischen Kraftstoffes (46) optimiert ist.
